# EUROPÄISCHE PATENTANMELDUNG

(11) **EP 1 016 346 A1**
(43) Veröffentlichungstag der Anmeldung: **05.07.2000**
(21) Anmeldenummer: 98124836.2
(22) Anmeldetag: 30.12.1998
(51) Int. Cl.: A23B 4/16, A23L 3/3418

(54) **Verfahren zur Behandlung von biologischem Material , insbesondere Frischfisch**

(71) Anmelder: Dunkelmann & Pollakowski GbR, 22851 Norderstedt (DE)
(72) Erfinder: Dunkelmann, Rolf, 22397 Hamburg (DE); Pollakowski, Thomas, 22397 Hamburg (DE)

(57) **Zusammenfassung**

Es wird ein Verfahren zur Behandlung von biologischem Material, insbesondere Frischfisch, in einem geschlossenen Volumen, insbesondere in einem Transportbehälter (Container), vorgeschlagen. Dabei wird das biologische Material über eine vorbestimmte Zeit alternierend mit wenigstens einer sauerstoffangereicherten Atmosphäre und wenigstens einer sauerstoffabgereicherten Atmosphäre beaufschlagt.

## Beschreibung

Die Erfindung betrifft ein Verfahren zur Behandlung von biologischem Material, insbesondere Frischfisch, in einem geschlossenem Volumen, insbesondere in einem Transportbehälter (Container).

Es ist bekannt, biologisches Material, insbesondere tierische Lebensmittel, sei es tierisches Fleisch bzw. Fisch, d.h. schlechthin sogenannte Meeresfrüchte nach dem Schlachten bzw. dem Fang für einen Transport vom Schlachtort bzw. Fangort zum Verbraucher, gegebenenfalls unter Zwischenschaltung von einer temporären Lagerung, durch Kühlung oder sogar Einfrieren haltbar zu machen.

Andere biologische Materialien wie Obst und Gemüse werden bislang unter Umgebungsbedingungen, unter Modifizierter Atmosphäre (MA) oder Kontrollierter Atmosphäre (CA) bei gleichzeitiger Kühlung, mit oder ohne geregelter relativer Feuchte, mit oder ohne geregelter Luft- oder Atmosphärenströmung, unter Zusatz weiterer Gase (z.B. Edelgase) oder gasförmiger Metabolite (z.B. CO₂, u.a.) oder dem Entzug gasförmiger Metabolite (z.B. Ethylen, u.a.) gelagert und/oder transportiert.

Es ist in der Fachwelt und auch dem Verbraucher allgemein bekannt, daß bestimmte biologische Materialien, insbesondere solche tierischen Ursprungs, sehr unterschiedlich auf eine Kühlung bzw. ein Einfrieren reagieren. Bestimmte biologische Materialien tierischen Ursprungs, insbesondere Frischfisch, müssen, wenn sie für längere Zeiträume gelagert werden sollen, verhältnismäßig tiefen Temperaturen ausgesetzt werden, damit sie noch in genießbarer Form dem Verbraucher zugeführt werden können. Um den Frischegeschmack dieser Materialien zu erhalten, was insbesondere für Fisch gilt, muß vermieden werden, daß der Fisch zwischen Fang und Verbrauch selbst derart abgekühlt wird, daß er einen gefrorenen Zustand einnimmt. Eisbildung im Fleisch des Fisches muß auf alle Fälle verhindert werden. Aus diesem Grunde werden biologische Materialien tierischen Ursprungs, die als Lebensmittel dienen, nur soweit zur Lagerung abgekühlt, bevor sie dem Endverbraucher erreichen, daß sie zur Aufrechterhaltung ihres Frischegeschmacks nicht gefroren werden, andererseits aber vor dem Verderb geschützt sind.

Demzufolge sind aber auch nichtgefrorene biologische Materialien tierischen Ursprungs der Einwirkung von Mikroorganismen stärker ausgesetzt, die, je nach Art der biologischen tierischen Materialien, Ursache ihres Verderbs sind.

Allen derzeitigen Methoden ist gemeinsam, daß die angewandte Atmosphäre in ihrer Zusammensetzung entweder praktisch konstant ist (Luft), oder innerhalb gewisser Grenzen konstant gehalten wird durch Regelung der Zusammensetzung der eingebrachten Atmosphäre und Anwendung von Gaswäschern oder Absorbern zur Entfernung gasförmiger Metabolite oder gasförmiger Komponenten (CA), oder bei Beginn des Prozesses die Produkte mit einer Atmosphäre definierter Zusammensetzung beaufschlagt werden (MA) und diese Atmosphäre - in der Regel in geschlossenen Räumen - durch Wechselwirkung mit den Produkten, d.h. durch Aufnahme von bzw. Reaktionen mit gasförmigen Komponenten wie O₂ oder CO₂, oder durch Freisetzen gasförmiger Metabolite wie CO₂ oder Ethylen, verändert wird.

Um den Zugang der in normaler Umgebung immer vorhandenen Mikroorganismen zu dem biologischen Material zu unterbinden, wird beispielsweise Fleisch oder Fisch vakuumdicht verpackt. Aber auch derart verpacktes biologisches Material tierischen Ursprungs ist in Abhängigkeit vom Vakuum, der Sauerstoffdurchlässigkeit der Werkstoffe der Verpackung sowie der Kohlendioxidkonzentration im Inneren der Verpackung einem Befall von Mikroorganismen ausgesetzt, die sich in einer sauerstoffabgereicherten Atmosphäre vermehren können, da sie für ihren Stoffwechsel und ihre Vermehrung keinen Sauerstoff brauchen. Diese Mikroorganismen sind beispielsweise Enterobacteriaceaen, Pseudomonas, Aeromonas, Shewanella putrefaciens, Photobacterium, Lactobacillus und Brochothrix thermosphacta.

Auf nicht vakuumverpacktem biologischem, tierischem Material wie Fisch findet man beispielsweise Mikroorganismen wie Enterobacteriaceaen, Pseudomonas, Aeromonas, Acinetobacter, Moraxella, Psychrobacter, Shewanella putrefaciens, Photobacterium und Flavobacterium.

Von besonderer Bedeutung für die Ursache des Verderbs von frischem biologischem Material tierischen Ursprungs, insbesondere Fisch, sind pathogene und toxinogene Bakterien wie Salmonella, Vibrio spp., Shigella, Staphylococcus aureus, Clostridium botulinum und Clostridium perfringens.

Wie schon oben angedeutet, unterscheidet sich das Wachstumsverhalten der beispielhaft voraufgeführten Mikroorganismen ganz allgemein hinsichtlich ihres Verhaltens gegenüber Sauerstoff, was natürlich auch für das Stoffwechselverhalten der Mikroorganismen gilt. (Obligat) aerobe Bakterien, beispielsweise Pseudomonaceae, benötigen für ihr Wachstum bzw. ihre Vermehrung den Sauerstoff der Luft. Mikroaerophile Bakterien benötigen zwar Sauerstoff, tolerieren aber nur einen reduzierten Sauerstoffpartialdruck. (Obligat) anaerobe Bakterien, beispielsweise Clostridium botulinum und -perfringens, gewinnen ihre Energie ausschließlich durch Gärung, d.h. ohne Sauerstoff. Für diese Bakterien ist Sauerstoff bakteriostatisch, d.h. es findet kein Wachstum statt, bisweilen ist der Sauerstoff bezüglich dieser Bakterien sogar toxisch, d.h. sie sterben ab.

Zudem gibt es aerotolerante anaerobe Bakterien, beispielsweise Lactobacillaceae, die einen anaeroben Stoffwechsel besitzen, jedoch in Gegenwart von Luftsauerstoff wachsen können. Schließlich gibt es fakultativ anaerobe Bakterien, beispielsweise Enterobacteriaceae, d.h. Enterobacter, Escherichia, Salmonella und Vibrionaceae, d.h. Vibrio, Aeromonas und Micrococcaceae, wie Staphylococcus aureus, die bevorzugt aerob wachsen, d.h. in Gegenwart von Luftsauerstoff, die jedoch in Abwesenheit von Sauerstoff ihren Stoffwechsel auf Gärung, d.h. Energiegewinn ohne Sauerstoff, umstellen können.

Obwohl auch andere Einflüsse als Mikroorganismen bzw. Bakterien für den Prozeß des Verderbens biologischen, tierischen Materials, das nicht mehr lebt, verantwortlich sind, beispielsweise die Zersetzung des Eiweißes, des Lipids usw., sind als Hauptursache für den Verderb biologischen, tierischen Materials Mikroorganismen, beispielsweise der voraufgeführten Art, verantwortlich.

Man hat den schädlichen Einfluß der Mikroorganismen auf biologisches, tierisches Material, beispielsweise Fleisch und Fisch, dadurch zu beheben versucht, daß man das biologische Material einer Inertgasatmosphäre während der Lagerung und/oder während des Transports aussetzte und dabei beispielsweise eine Atmosphäre von bis zu 99 % Stickstoff benutzt. Dieses bekannte Verfahren, was beispielsweise in der DE-PS 38 29 435 beschrieben worden ist, hat beim Transport bzw. bei der Lagerung von pflanzlichen biologischem Material, d.h. bei Früchten, Gemüse, Obst und dergleichen, sehr gute Erfolge gezeitigt. Auch tierisches Fleisch konnte erwartungsgemäß über lange Zeiträume unter einer Inertgasatmosphäre transportiert und gelagert werden, ohne daß das Material während dieser Zeit einem Verderb unterworfen war, es hat sich jedoch insbesondere bei dem Transport und der Lagerung von Frischfisch als noch nicht so optimal erwiesen, wie es an sich gewünscht wäre, da insbesondere bei Fisch aufgrund des sehr hohen Eiweißgehalts der bakterielle Befall jedenfalls in bezug auf obligat anaerobe Bakterien, die ja ohne Sauerstoff existieren können, d.h. auch in einer Inertgasatmosphäre vermehrungsfähig und stoffwechselfähig sind, sehr stark ist.

Zusammenfassend kann gesagt werden, daß alle derzeitig angewandten Atmosphären (Sauerstoffausschluß, verminderte Sauerstoffkonzentration, Luft, erhöhte Sauerstoffkonzentration) Bedingungen darstellen, in denen entsprechende Keimgruppen nennenswert zu wachsen in der Lage sind und der mikrobiologische Verderb entsprechend fortschreitet.

Des weiteren werden unter veränderten Atmosphären (in Abhängigkeit der jeweiligen Zusammensetzung) die Reaktionsgeschwindigkeiten aufeinanderfolgender, physiologisch-enzymatischer Reaktionen im Produkt unterschiedlich stark beeinflußt (beschleunigt oder gehemmt), was innerhalb einer Reaktionskaskade zum Stau von Metaboliten führt und damit unerwünschte Veränderungen (z.B. off-flavour-Entwicklung, punktueller internal breakdown, Entfärbungen, Verfärbungen, u.a.) ausgelöst werden können.

Es ist somit Aufgabe der vorliegenden Erfindung, ein Verfahren zur Behandlung biologischen Materials zu schaffen, mit dem es ermöglicht wird, das biologische Material ohne die Notwendigkeit des Einfrierens oder Anfrierens über lange Zeiträume lagern zu können, beispielsweise vom Zeitpunkt des Fangens von Fisch bis zum Verzehr durch den Endverbraucher, ohne daß Einbußen an der Genießbarkeit des biologischen Materials und ohne Einbußen an Frische und Geschmack befürchtet werden müssen, wobei das Verfahren einfach und kostengünstig ausführbar sein soll und eine komplizierte Infrastruktur zum Betrieb des Verfahrens entbehrlich ist, so daß das Verfahren sowohl unmittelbar am Schlachtort und Fangort als auch während des Transports und bei der Lagerung des biologischen Materials leicht angewendet werden kann.

Gelöst wird die Aufgabe gemäß der Erfindung dadurch, daß das biologische Material über eine vorbestimmbare Zeit alternierend mit wenigstens einer sauerstoffangereicherten Atmosphäre und wenigstens einer sauerstoffabgereicherten Atmosphäre beaufschlagt wird.

Der Vorteil des erfindungsgemäßen Verfahrens besteht im wesentlichen darin, daß dadurch das Wachstum der Mikroorganismen während des Transports und/oder der Lagerung bei biologischem Material tierischen Ursprungs, insbesondere bei frisch gefangenem Fisch, derart beeinflußt werden kann, daß alle Gruppen der oben aufgeführten Mikroorganismen derart beeinflußt werden, daß ihr Stoffwechsel und ihre Vermehrungsfähigkeit so beeinflußt werden, daß sie faktisch nicht mehr wachsen bzw. sich faktisch nicht mehr vermehren.

Der Vorgang, der mit der erfindungsgemäßen Lösung ausgelöst wird, ist der, daß beispielsweise aerobe Bakterien bei verringertem Sauerstoffgehalt in einem Volumen in ihrem Wachstum gehemmt werden, während mikroaerophile bzw. anaerobe Bakterien hierdurch gegebenenfalls in ihrem Wachstum zunehmen. Die fakultativ anaeroben Bakterien stellen bei Bedarf ihren Stoffwechsel auf Gärung um und können sich daraufhin wieder weiter vermehren. Wird das biologische, tierische Material anschließend wieder einer sauerstoffangereicherten Atmosphäre unterworfen, so kehren sich die voraufgeführten Prozesse um, d.h. fakultativ anaerobe Bakterien stellen ihren Stoffwechsel erneut um und wachsen wieder aerob. Gehemmt werden nun anaerobe Bakterien, wohingegen die aeroben wieder ungehemmt wachsen können.

Erfindungsgemäß wird nun eine nahezu vollständige Hemmung aller auf dem biologischen, tierischen Material vorkommenden Mikroorganismen durch das alternierend periodische Wechseln zwischen mindestens zwei hinsichtlich ihres Gehalts an Sauerstoff gegensätzlichen Atmosphären gewährleistet, nämlich durch die erfindungsgemäß vorgeschlagene sauerstoffangereicherte Atmosphäre und die erfindungsgemäß vorgeschlagene sauerstoffabgereicherte Atmosphäre. Durch die dabei permanent erforderliche Stoffwechselumstellung der Mikroorganismen können zudem auch fakultativ anaerobe Bakterien irritiert und damit nachteilig geschädigt werden. Sie kommen praktisch aufgrund der immerwährenden Streßphase infolge der immer wieder erforderlichen Umstellung auf die jeweilige Atmosphäre aus dieser nicht heraus und werden in großem Umfang letal.

Das Verfahren selbst ist, wie angestrebt, bei seiner grundsätzlichen Ausgestaltung verhältnismäßig leicht durchführbar, da eine Sauerstoffanreicherung bzw. eine Sauerstoffabreicherung der Atmosphäre in einem Volumen, ob nun in Form eines Lagerhauses, eines Transportbehälters wie eines Containers, in einem geeignet ausgebildeten Lagerraum eines Fischfangschiffes und dergleichen mittels sauerstoffselektiver und/oder stickstoffselektiver Gastrennmembranen und entsprechenden Einrichtungen zu deren Betrieb leicht erreicht werden kann.

Vorteilhafterweise ist die zeitliche Länge der Beaufschlagung mit der sauerstoffangereicherten Atmosphäre und der sauerstoffabgereicherten Atmosphäre wählbar und einstellbar, wobei diese Länge der Beaufschlagung in Abhängigkeit der auf bzw. in dem biologischen, tierischen Material zu erwartenden Mikroorganismen gewählt werden kann. Es kann somit gezielt beispielsweise die zeitliche Länge der sauerstoffabgereicherten Atmosphäre auf die in ihrem Wachstum zu hemmenden aeroben Bakterien nach Art und Umfang eingegangen werden und auch in bezug auf die zeitliche Länge der sauerstoffangereicherten Atmosphäre, in der mikroaerophile bzw. anaerobe Bakterien in ihrem Wachstum bzw. Stoffwechsel gehemmt werden.

Es ist auch vorteilhaft möglich, die zeitliche Länge der Beaufschlagung mit der sauerstoffangereicherten Atmosphäre gegenüber der zeitlichen Länge der Beaufschlagung der sauerstoffabgereicherten Atmosphäre wählbar und unterschiedlich einstellbar auszubilden, d.h. dem Umstand Rechnung zu tragen, daß aerobe Bakterien für ihre Wachstumshemmung gegenüber anaeroben Bakterien in bezug auf ihre Wachstumshemmung und/oder Stoffwechselhemmung in den alternierenden Beaufschlagungsperioden unterschiedlich lang einer sauerstoffangereicherten bzw. sauerstoffabgereicherten Atmosphäre ausgesetzt sein müssen. Dadurch kann das Verfahren so gezielt ausgeübt werden, daß ein Optimum an Wachstums- bzw. Stoffwechselhemmung der jeweiligen Bakterienart erreicht wird.

Um in dem Volumen, in dem sich das zu lagernde bzw. zu transportierende biologische, tierische Material aufhält, keinen gegenüber dem Atmosphärendruck der Umgebung stark oder gegebenenfalls überhaupt unterschiedlichen Druck auszuüben, wenn die Periode der sauerstoffabgereicherten Atmosphäre das biologische Material beaufschlagt, ist es vorteilhaft, daß der sauerstoffangereicherten Atmosphäre und/oder der sauerstoffabgereicherten Atmosphäre jeweils, quasi als Komplementvolumen, Stickstoff entzogen bzw. Stickstoff beigemengt wird.

Es ist aber auch vorteilhafterweise möglich, zum Erhalt eines im wesentlichen konstanten Atmosphärendrucks im Volumen vorteilhafterweise anstelle oder zusätzlich der sauerstoffangereicherten Atmosphäre und/oder der sauerstoffabgereicherten Atmosphäre, quasi als Komplementvolumen, Kohlendioxid zu entziehen bzw. hinzuzufügen.

Schließlich ist es ebenfalls vorteilhafterweise möglich, als Alternative oder zusätzlich zu Stickstoff und/oder Kohlendioxid vorteilhafterweise der sauerstoffangereicherten Atmosphäre und/oder der sauerstoffabgereicherten Atmosphäre, quasi als Komplementvolumen, ein Inertgas oder ein Inertgasgemisch zu entziehen bzw. beizumengen, um im Volumen, in dem das biologische Material befindet, einem gegenüber dem Umgebungsdruck gleichen oder zumindest nicht sehr unterschiedlichen Innendruck zu gewährleisten.

Um sicherzustellen, daß das sich im Volumen befindende biologische, tierische Material immer gegenüber der Umgebungstemperatur des Volumens auf konstanter Temperatur befindet, werden Maßnahmen vorgesehen, mit der die Atmosphäre vorteilhafterweise temperiert werden kann, wobei Temperierung bedeutet, daß vorteilhafterweise die Temperatur der Atmosphäre gegenüber der Umgebung abgesenkt wird bzw. daß die Temperatur der Atmosphäre gegenüber der Umgebung erhöht wird. Mittels dieser Maßnahmen ist es zudem auch möglich, gezielt auf die Mikroorganismen einzuwirken, die bei ganz bestimmten Temperaturen eine bestimmte optimale Wachstumshemmung bzw. eine bestimmte optimale Hemmung ihres Stoffwechsels zeigen. Dabei ist es vorteilhafterweise auch möglich, wenigstens die sauerstoffangereicherte Atmosphäre gegenüber wenigstens der sauerstoffabgereicherten Atmosphäre unterschiedlich zu temperieren, so daß auch auf diesem Wege optimal auf die Mikroorganismen abgestellt werden kann, die im sauerstoffangereicherten Milieu bei einer bestimmten Temperatur ein Optimum an Wachstumshemmung bzw. ein Optimum an Hemmung ihres Stoffwechsels zeigen, und gleichermaßen auch auf die gezielt abstellen zu können, die im sauerstoffabgereicherten Milieu ein Optimum an Wachstumshemmung bzw. ein Optimum an Hemmung ihres Stoffwechsels zeigen.

Zudem kann es vorteilhaft sein, das Verfahren derart weiter auszugestalten, daß die Temperierung über eine vorbestimmte Zeit alternierend mit der alternierenden Beaufschlagung des biologischen Materials mit der sauerstoffangereicherten Atmosphäre und der sauerstoffabgereicherten Atmosphäre erfolgt, d. h. die Temperaturänderung mit der Änderung von sauerstoffangereicherter zu sauerstoffabgereicherter Atmosphäre zu koppeln, und zwar gegebenenfalls auch phasenverschoben, und zwar phasenverschoben sogar bis zu 180°. Dadurch kann erreicht werden, daß die "Irritation" der Mikroorganismen so groß wird, daß diese nicht nur in ihrem Wachstum gehemmt werden, sondern der Stoffwechsel vollständig zum Erliegen kommt, so daß diese absterben.

Naturgemäß verlieren biologische, tierische Materialien aufgrund normaler Verdunstungsvorgänge und aufgrund des mit zunehmendem Abstand vom Zeitpunkt des Absterbens des biologischen, tierischen Materials einsetzenden Abbaus der Funktionsfähigkeit der natürlichen Zellmembranen, die ihre natürliche, biologische Funktion verlieren, Feuchtigkeit. Um dieser Verdunstung von Feuchtigkeit bzw. der Abgabe von Feuchtigkeit zumindest teilweise entgegenwirken zu können, ist im Volumen vorteilhafterweise eine vorwählbare absolute Luftfeuchtigkeit einstellbar, wobei diese Luftfeuchtigkeit durch die Zufuhr der alternierend in das Volumen eingebrachten sauerstoffangereicherten bzw. sauerstoffabgereicherten Atmosphäre transportiert werden kann, es ist aber auch möglich, direkt Wasser in das Volumen hineinzunebeln.

Auch die Luftfeuchtigkeit im Volumen kann vorzugsweise über eine vorbestimmte Zeit alternierend mit der alternierenden Beaufschlagung des biologischen Materials mit der sauerstoffangereicherten Atmosphäre und der sauerstoffabgereicherten Atmosphäre verändert werden, wobei dieses in Phase aber auch phasenverschoben bis zu 180° erfolgen kann. Durch die gezielte Zufuhr von Luftfeuchtigkeit kann zudem auch das Wachstum bzw. deren Stoffwechsel zusätzlich hemmend beeinflußt werden.

Alle voraufgeführten Parameter, nämlich der Grad der Sauerstoffanreicherung der Atmosphäre, der Grad der Sauerstoffabreicherung der Atmosphäre, der entsprechende Grad der Zufuhr bzw. der Abfuhr von Stickstoff, Kohlendioxid, die Zunahme bzw. die Abnahme der Temperatur und die jeweilige Phase der voraufgeführten Parameter gegenüber der Phase der sauerstoffangereicherten Atmosphäre bzw. der sauerstoffabgereicherten Atmosphäre können mittels des Verfahrens vorteilhafterweise rechnergestützt gesteuert bzw. beeinflußt werden. Geeignete Software-Programme können derartige Parameter im voraufgeführten Sinne steuern, so daß eine optimale Anpassung des Verfahrens an das jeweilige zu transportierende bzw. zu lagernde biologische, tierische Material möglich ist.

Schließlich kann bei einer optimalen Verfahrensführung die Atmosphäre im geschlossenen Volumen vorteilhafterweise nach Art eines Kreislaufs sensorisch ständig in bezug auf wenigstens die Konzentration des Sauerstoffs in der sauerstoffangereicherten und der sauerstoffabgereicherten Atmosphäre überwacht und/oder gesteuert werden, was allerdings gleichermaßen auch für alle anderen voraufgeführten Parameter, wie den Anteil des Stickstoffs im Volumen, des Kohlendioxids und des Inertgases Inertgases bzw. Inertgasgemisches im Raumvolumen gilt, und natürlich auch für die Temperatur im Raumvolumen und den Grad der Feuchtigkeit. Es ist somit eine vollständige selbständige Erfassung und Steuerung aller Parameter einschließlich der Länge der Periode der Zufuhr der sauerstoffangereicherten Atmosphäre und der sauerstoffabgereicherten Atmosphäre möglich, so daß kein Zugriff von außen erforderlich ist, wodurch zusätzlich auch noch Fehlbedienungen ausgeschlossen werden. Zusätzlich ist es möglich, das Verfahren derart auszugestalten, daß alle voraufgeführten Parameter erfaßt und protokolliert werden, so daß eine absolute Gewähr geschaffen wird, daß das im Volumen mittels des erfindungsgemäß aufgezeigten Verfahrens beaufschlagte biologische, tierische Material über den vorbestimmten Zeitraum der Behandlung einer ordnungsgemäßen Beaufschlagung, wie gewünscht, unterworfen worden war.

Die Erfindung wird nun anhand eines Ausführungsbeispiels im einzelnen beschrieben.

Das Verfahren zur Behandlung von biologischem Material zum Zwecke seiner Haltbarhaltung wird anhand eines Beispiels beschrieben, bei dem das biologische Material aus frisch gefangenem Fisch besteht. Entweder an Bord eines Fangschiffes oder unmittelbar nachdem der Fang im Bestimmungshafen angelandet worden ist, wird der Fisch in ein geschlossenes Volumen, beispielsweise in Form eines Transportbehälters, beispielsweise in Form eines Containers, eingeladen, wobei das geschlossene Volumen allerdings auch in Form eines Lagerhauses für den Fisch oder in Form eines Sattelaufliegers für Lkw oder in Form eines Eisenbahnwaggons ausgebildet sein kann. Nachdem der Fisch dort auf geeignete Weise gestaut worden ist, wird das Verfahren in Gang gesetzt. Dabei wird der Fisch alternierend einer sauerstoffangereicherten Atmosphäre und einer sauerstoffabgereicherten Atmosphäre ausgesetzt. Grundsätzlich kann die sauerstoffangereicherte Atmosphäre, die im Volumen des Behälters alternierend die sauerstoffabgereicherte Atmosphäre bzw. umgekehrt ersetzt, abrupt gegen die jeweils andere Atmosphäre ausgetauscht werden, es ist aber beispielsweise auch möglich, den Vorgang des Austauschs der jeweiligen anderen Atmosphäre im Raumvolumen harmonisch vonstatten gehen zu lassen, beispielsweise angenähert an eine Sinusfunktion. Die zeitliche Länge der Beaufschlagung des Volumens, in dem der Frischfisch untergebracht ist, mit der sauerstoffangereicherten und der sauerstoffabgereicherten Atmosphäre kann beispielsweise in Abhängigkeit der Art des Fisches und der Umgebungsbedingungen gewählt werden. In Abhängigkeit der Mikroorganismen, die für den Verderb des Fisches sorgen, siehe oben, kann neben der alternierend oszillierend zugeführten sauerstoffangereicherten Atmosphäre bzw. sauerstoffabgereicherten Atmosphäre dem Raumvolumen Stickstoff und/oder Kohlendioxid und/oder ein Inertgas bzw. ein Inertgasgemisch beigemischt werden, das allerdings volumenmäßig so gesteuert wird, daß im Raumvolumen, in dem der Frischfisch angeordnet ist, kein oder nur ein geringer Überdruck entsteht. Die sauerstoffabgereicherte Atmosphäre kann beispielsweise aus bis zu 98 % N₂ bestehen bzw. aus bis zu 98 % CO₂. Die sauerstoffangereicherte Atmosphäre kann beispielsweise aus bis zu 98 % O₂ bestehen. Als Komplement zu einem 100 %igen Volumen können alle Edelgase und die jeweiligen voraufgeführten Gase, die nicht die jeweilige Atmosphäre bilden sollen, herangezogen werden.

Gleichzeitig wird die Temperatur im Raumvolumen auf vorbestimmte Weise eingestellt, beispielsweise in einem Bereich von -2 C bis 20° C, und geregelt, was auch in Abhängigkeit der Umgebungstemperatur und der Art des zu lagernden Gutes geschieht.

Die Temperierung der Atmosphäre im Raumvolumen kann grundsätzlich zwar durch gesonderte Temperierungsmittel, die im Raumvolumen vorgesehen sind, bewirkt werden, es ist aber eine Temperierung des Raumvolumens genauer und zudem einfacher dadurch möglich, daß die sauerstoffangereicherte Atmosphäre bzw. die sauerstoffabgereicherte Atmosphäre, bevor sie in das Raumvolumen eintritt, auf eine geeignet vorwählbare Temperatur temperiert wird. Dabei ist es auch möglich, die Temperierung auch derart zu steuern, daß beispielsweise die sauerstoffangereicherte Atmosphäre mit einer gegenüber der sauerstoffabgereicherten Atmosphäre unterschiedlichen Temperatur in das Raumvolumen, in dem sich der Frischfisch befindet, überführt wird. Gleiches kann sinngemäß auch mit dem zugeführten Stickstoff und/oder dem zugeführten Kohlendioxid und/oder dem zugeführten Inertgas bzw. dem Inertgasgemisch und dementsprechend auch anderer Gase bzw. Gasgemische geschehen. So können im Raumvolumen beispielsweise die Temperatur der sauerstoffabgereicherten Atmosphäre derart gewählt werden, das sie optimal nekrotisch bzw. vermehrungs- und stoffwechselhemmend auf die jeweiligen aeroben bzw. anaeroben Bakterien ist.

Bei Bedarf kann dem Raumvolumen auch noch Feuchtigkeit zugeführt werden, wenn eine vorgewählte, relative Luftfeuchtigkeit, die in dem Raumvolumen erreicht werden soll, nicht fortwährend gewährleistet ist. Auch die Luftfeuchtigkeit kann alternierend mit der alternierenden Beaufschlagung des Frischfisches mit der sauerstoffangereicherten Atmosphäre bzw. der sauerstoffabgereicherten Atmosphäre verändert werden, und zwar phasengleich, aber auch in der Phase unterschiedlich, um auch dadurch einen nekrotischen bzw. stoffwechselhemmenden bzw. vermehrungshemmenden Einfluß auf die Mikroorganismen zu optimieren. Die relative Luftfeuchtigkeit kann beispielsweise im Bereich von 40 % bis 99 % liegen.

Das gesamte Verfahren kann nach dem Beladen des Raumvolumens mit Fisch und dem Verschließen des Raumvolumens bis zu einem Öffnen des Raumvolumens ohne menschlichen Eingriff rechnergestützt gesteuert werden, womit die Steueralgorithmen unmittelbar auf das zu lagernde bzw. transportierende biologische Material optimal angepaßt sein können, im vorliegenden Fall angepaßt auf Frischfisch. Die Atmosphäre wird dabei im geschlossenen Volumen nach Art eines Kreislaufs sensorisch ständig überwacht. Die Überwachung erfolgt in bezug auf alle Parameter, d.h. auf den Sauerstoffgehalt der sauerstoffabgereicherten Atmosphäre und der sauerstoffangereicherten Atmosphäre in bezug auf den Atmosphärendruck im Volumen, in bezug auf die Konzentration des Stickstoffs und/oder des Kohlendioxids und/oder des Inertgases bzw. des Inertgasgemisches im Volumen, in bezug auf die Temperatur, in bezug auf die relative Luftfeuchtigkeit im Volumen, die zeitliche Länge der Beaufschlagung des Raumvolumens mit einem, mehreren oder allen der voraufgeführten Parameter und der Steuerung des Verfahrens aufgrund eines, mehrerer oder aller Parameter des Verfahrens.

Sinngemäß gilt das vorangehend Gesagte für alle biologischen Materialien, d.h. nicht nur für Frischfleisch, sondern auch für Frischfleisch und die daraus gewonnenen Erzeugnisse als Zwischen- und/oder Endprodukte.

## Patentansprüche

1. Verfahren zur Behandlung von biologischem Material, insbesondere Frischfisch, in einem geschlossenem Volumen, insbesondere in einem Transportbehälter (Container), dadurch gekennzeichnet, daß das biologische Material über eine vorbestimmbare Zeit alternierend mit wenigstens einer sauerstoffangereicherten Atmosphäre und wenigstens einer sauerstoffabgereicherten Atmosphäre beaufschlagt wird.

2. Verfahren nach Anspruch 1, dadurch gekennzeichnet, daß die zeitliche Länge der Beaufschlagung mit der sauerstoffangereicherten Atmosphäre und der sauerstoffabgereicherten Atmosphäre wählbar und einstellbar ist.

3. Verfahren nach einem oder beiden der Ansprüche 1 oder 2, dadurch gekennzeichnet, daß die zeitliche Länge der Beaufschlagung mit der sauerstoffangereicherten Atmosphäre gegenüber der zeitlichen Länge der Beaufschlagung mit der sauerstoffabgereicherten Atmosphäre wählbar und unterschiedlich einstellbar ist.

4. Verfahren nach einem oder mehreren der Ansprüche 1 bis 3, dadurch gekennzeichnet, daß der sauerstoffangereicherten Atmosphäre und/oder der sauerstoffabgereicherten Atmosphäre Stickstoff beigemengt wird.

5. Verfahren nach einem oder mehreren der Ansprüche 1 bis 4, dadurch gekennzeichnet, daß der sauerstoffangereicherten Atmosphäre und/oder der sauerstoffabgereicherten Atmosphäre Kohlendioxid beigemengt wird.

6. Verfahren nach einem oder mehreren der Ansprüche 1 bis 5, dadurch gekennzeichnet, daß der sauerstoffangereicherten Atmosphäre und/oder der sauerstoffabgereicherten Atmosphäre ein Inertgas oder ein Inertgasgemisch beigefügt wird.

7. Verfahren nach einem oder mehreren der Ansprüche 1 bis 6, dadurch gekennzeichnet, daß die Atmosphäre temperiert wird.

8. Verfahren nach Anspruch 7, dadurch gekennzeichnet, daß die Temperatur der Atmosphäre gegenüber der Umgebung abgesenkt wird.

9. Verfahren nach Anspruch 7, dadurch gekennzeichnet, daß die Temperatur der Atmosphäre gegenüber der Umgebung erhöht wird.

10. Verfahren nach einem oder mehreren der Ansprüche 7 bis 9, dadurch gekennzeichnet, daß wenigstens die sauerstoffangereicherte Atmosphäre gegenüber wenigstens der sauerstoffabgereicherten Atmosphäre unterschiedlich temperiert wird.

11. Verfahren nach einem oder mehreren der Ansprüche 7 bis 10, dadurch gekennzeichnet, daß die Temperierung über eine vorbestimmte Zeit alternierend mit der alternierenden Beaufschlagung des biologischen Materials mit der sauerstoffangereicherten Atmosphäre und der sauerstoffabgereicherten Atmosphäre erfolgt.

12. Verfahren nach einem oder mehreren der Ansprüche 1 bis 11, dadurch gekennzeichnet, daß im Volumen eine vorwählbare absolute Luftfeuchtigkeit einstellbar ist.

13. Verfahren nach Anspruch 12, dadurch gekennzeichnet, daß die Luftfeuchtigkeit im Volumen über eine vorbestimmte Zeit alternierend mit der alternierenden Beaufschlagung des biologischen Materials mit der sauerstoffangereicherten Atmosphäre und der sauerstoffabgereicherten Atmosphäre verändert wird.

14. Verfahren nach einem oder mehreren der Ansprüche 1 bis 13, dadurch gekennzeichnet, daß wenigstens die Steuerung des Anteils des Sauerstoffs in der sauerstoffangereicherten und/oder sauerstoffabgereicherten Atmosphäre rechnergestützt erfolgt.

15. Verfahren nach einem oder mehreren der Ansprüche 1 bis 14, dadurch gekennzeichnet, daß die Atmosphäre im geschlossenen Volumen nach Art eines Kreislaufs sensorisch ständig in bezug auf wenigstens die Konzentration des Sauerstoffs in der sauerstoffangereicherten und der sauerstoffabgereicherten Atmosphäre überwach- und/oder steuerbar ist.
